# EUROPÄISCHE PATENTANMELDUNG

(11) **EP 0 586 338 A1**
(43) Veröffentlichungstag der Anmeldung: **09.03.1994**
(21) Anmeldenummer: 93810582.2
(22) Anmeldetag: 17.08.1993
(51) Int. Cl.: A47B 96/00, F16B 3/00, F16B 12/10, A47B 57/40, F16B 12/42

(54) **Einrichtung mit mehreren zusammenfügbaren Elementen**

(30) Priorität: 17.08.1992 CH 2565/92
(71) Anmelder: Remund, Ulrich, CH-3052 Zollikofen (CH); Arnold, Martin, CH-3052 Zollikofen (CH); Zimmermann, Bernd, CH-3011 Bern (CH)
(72) Erfinder: Remund, Ulrich, CH-3052 Zollikofen (CH); Arnold, Martin, CH-3052 Zollikofen (CH); Zimmermann, Bernd, CH-3011 Bern (CH)
(74) Vertreter: Roshardt, Werner Alfred, Dipl.-Phys.

(57) **Zusammenfassung**

Eine Einrichtung, insbesondere ein Gestellsystem, umfasst mehrere zusammenfügbare Elemente (1, 3, 7). Ein erstes Element bildet eine Stütze (1) und ist mit mindestens einer, vorzugsweise mehreren auf gleicher Höhe angeordneten Oeffnungen (2.1, ..., 2.6) ausgestattet. Das zweite Element (3) ist als Träger ausgebildet, der mit seinem Ende in die Oeffnung (2.1, ..., 2.6) einführbar und an der Wandung einhakbar ist. Die Oeffnung (2.1, ..., 2.6) ist so ausgebildet, dass der Träger (3) in ihr zum Einhaken transversal verschiebbar ist, wobei ein Bereich der Oeffnung freigegeben wird. Das Verriegelungselement (7) ist in den freien Bereich einzufügen. Zwei Nasen (8.1, 8.2) verhindern, dass das es (7) durch die Oeffnung hindurchfallen kann.

## Beschreibung

### Technisches Gebiet

Die Erfindung bezieht sich auf eine Einrichtung, insbesondere ein Gestellsystem mit mehreren zusammenfügbaren Elementen, umfassend ein erstes Element mit einer durch mindestens eine Oeffnung durchbrochenen Wandung und ein zweites Element mit einem in die genannte Oeffnung einführbaren und an der Wandung einhakbaren Ende zur Bildung einer lösbaren Verbindung.

### Stand der Technik

Zusammensteckbare Gestell- und Regalsysteme gibt es in grosser Anzahl. Dabei gibt es Systeme, die primär für den einmaligen Aufbau mit individueller Zusammenstellung gedacht sind und solche, die insbesondere auf das wiederholte Aufbauen und Zerlegen hin konstruiert sind. Während in beiden Fällen stabile, zusammenfügbare Verbindungen zwischen den Elementen gefordert sind, stehen bei der zweiten Anwendung die einfache Zusammensetzbarkeit und die geringe Abnützung im Vordergrund. Wünschenswert ist es in jedem Fall, dass das System nicht als Hilfskonstruktion, sondern als ästhetisch eigenständige, die Präsentation abrundende Umrahmung wirkt.

### Darstellung der Erfindung

Aufgabe der Erfindung ist es nun, eine Einrichtung der eingangs genannten Art anzugeben, die flexibel einsetzbar, einfach zusammensetz- und zerlegbar und ästhetisch ansprechend ist.

Gemäss der Erfindung besteht die Lösung darin, dass die Oeffnung am genannten ersten Element so ausgebildet ist, dass das zweite Element in ihr zum Einhaken transversal verschiebbar ist, wobei ein Bereich der Oeffnung freigegeben wird, und dass ein Verriegelungselement vorgesehen ist, welches in den freien Bereich einfügbar ist.

Gemäss der Erfindung findet die Verriegelung allein durch die Anwesenheit des Verriegelungselementes statt. Ein Festschrauben oder sonstiges Verklemmen des zweiten Elements ist nicht erforderlich. Mit Vorteil ist das Verriegelungselement so geformt, dass es unter der Wirkung der Schwerkraft in der Stellung verharrt. Das erfindungsgemässe Gestellsystem kann also ohne Werkzeuge (d. h. von Hand) zusammengesetzt werden.

Gemäss einer bevorzugten Ausführungsform weist das zweite Element einander diametral gegenüberliegende, zum Einhaken geeignete, vorzugsweise U-förmige Ausnehmungen auf. Die im ersten Element vorgesehene Oeffnung ist länglich, vorzugsweise schlitzförmig. Die Wandung kommt zumindest an der Schmalseite der länglichen Oeffnung in die Ausnehmungen des zweiten Elements zu liegen. In Richtung parallel zum Schlitz ergibt sich daher eine besonders gute Belastbarkeit der Verbindung.

Gemäss einer besonders bevorzugten Ausführungsform ist das zweite Element als Träger mit einem flachen, insbesondere plattenförmigen Ende ausgebildet. Solche Träger lassen sich sehr einfach herstellen. Es können aber auch breite oder z. B. segmentartig abgerundete Profile verwendet werden.

Eine für ein solches Ende geeignete Oeffnung weist einen langen schmalen Bereich und einen seitlich (d. h. längsseitig) anschliessenden kürzeren Bereich auf. Das genannte Ende wird in den langen Bereich eingeführt und durch seitliches Verschieben in den kürzeren Bereich an der Wandung eingehakt.

Besonders bevorzugt ist eine Oeffnung von der Form zweier unmittelbar nebeneinander angeordneter Schlitze unterschiedlicher Länge aber gleicher Breite. Indem diese beiden Teilbereiche gleich breit sind, wird die Oeffnung nicht grösser als erforderlich. Entsprechend wird die Wandung weniger geschwächt und ist das Verriegelungselement nicht grösser als unbedingt erforderlich.

Das Verriegelungselement ist insbesondere ein flaches Plättchen, das am Ende beidseitig Verbreiterungen (Nasen) hat, die bei eingeführtem Verriegelungselement über den Rand der Oeffnung hinausragen. Die Verbreiterungen verhindern, dass das Plättchen durch die Oeffnung hindurchfallen kann.

Vorzugsweise ist das Verriegelungselement als Winkel ausgebildet. Der abgewinkelte Teil verschiebt dabei den Schwerpunkt des eingefügten Verriegelungselements nach "unten".

Im Sinn einer ersten Variante entspricht die Breite der U-förmigen Ausnehmungen am Ende des zweiten Elements etwa der Dicke der Wandung des ersten Elements. D. h. die Wandung passt relativ genau in die Ausnehmungen hinein. Das zweite Element wird zumindest in Schlitzrichtung spielarm festgehalten.

Das erste Element ist mit Vorteil eine rohrförmige Stütze, insbesondere von zylindrischer Form. Im Hinblick auf eine grosse Flexibilität des Systems sind auf gleicher Höhe mehrere Oeffnungen parallel zur Achse der Stütze vorgesehen.

Ist die mit der oben erwähnten ersten Ausführungsvariante erreichbare Stabilität nicht genügend, so sind im Sinn einer zweiten Ausführungsvariante die U-förmigen Ausnehmungen wesentlich breiter als die Dicke der Wandung des ersten Elements, insbesondere der Stütze auszubilden. Das Verriegelungselement weist ebenfalls U-förmige Ausnehmungen auf. Ein im Inneren der Stütze anzuordnendes Klemmorgan kann in die genannten Ausnehmungen zumindest teilweise eingreifen, um das zweite Element gegen die Wandung der Stütze zu verkeilen. Mit dieser Ausführungsvariante lassen sich besonders tragfähige, starre Rahmenkonstruktionen bilden. Die genannten Verbindungen werden vorzugsweise nur an ganz ausgewählten Stellen im zusammengefügten Gestell eingesetzt, um den Aufwand beim Aufstellen des Gestellsystems gering zu halten. Gegenüber konventionellen Schraubverbindungen haben sie den Vorteil, dass sie verborgen sind und den ästhetischen Gesamteindruck nicht beeinträchtigen können.

Das Klemmorgan umfasst z. B. zwei in die Stütze einbringbare Sprengringe, zwei den Innenquerschnitt der Stütze ausfüllende Scheiben und eine Schraubenstange zum Verbinden und Spannen der Scheiben. Die Sprengringe greifen in die U-förmigen Ausnehmungen der Trägerelemente und der Verriegelungselemente ein. Sie können einen Querschnitt aufweisen, der rund ist oder der innenseitig konisch angeschliffen ist.

Vorzugsweise umfasst die Einrichtung Blindelemente, die verbindungstechnisch einem Ende eines Trägers entsprechen. Auf diese Weise lassen sich beliebige Verbindungen in der erwähnten Weise fixieren.

Erfindungsgemässe Bausätze umfassen mehrere Stützen und Träger, sowie entsprechend viele Verriegelungselemente. Je nach Bedarf ist der Bausatz zum Konstruieren von Regalen, Messeständen, Anschlagwänden, Schaurauminneneinrichtungen etc. ausgebildet.

Weitere bevorzugte Ausführungsbeispiele und Merkmalskombinationen ergeben sich aus den nachfolgenden Beispielen und der Gesamtheit der Patentansprüche.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1: Ein Stützrohr mit mehreren erfindungsgemässen Oeffnungen;
- Fig. 2: einen Träger zum Einfügen in die Oeffnungen des in Fig. 1 gezeigten Stützrohrs;
- Fig. 3: ein Verriegelungselement;
- Fig. 4: eine schematische Darstellung einer bevorzugten erfindungsgemässen Oeffnung;
- Fig. 5: eine Darstellung einer erfindungsgemässen Verbindung im Schnitt;
- Fig. 6: ein Blindelement;
- Fig. 7: ein Verriegelungselement, welches für eine fixierbare Verbindung geeignet ist;
- Fig. 8: einen Sprengring im Achsenlängsschnitt;
- Fig. 9a, b: zwei Schnittdarstellungen einer erfindungsgemäss fixierten Verbindung.

In den Figuren sind entsprechende Teile mit gleichen Bezugszeichen versehen. Die einzelnen Figuren sind nicht massstabsgetreu gezeichnet. Relative Grössenverhältnisse sind jedoch zumindest grössenordnungsmässig wiedergegeben.

### Wege zur Ausführung der Erfindung

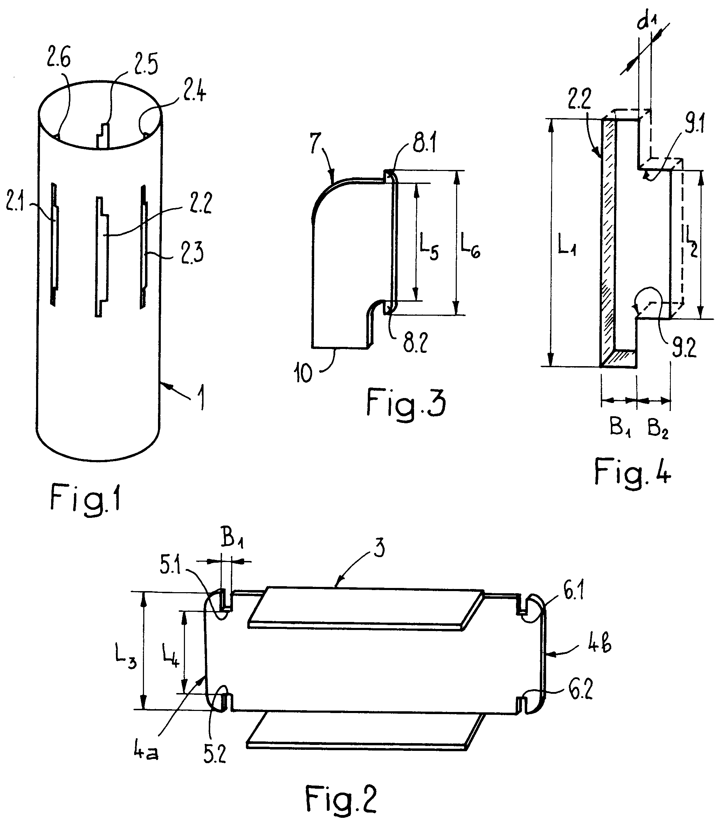

Fig. 1 zeigt einen Abschnitt einer erfindungsgemässen Stütze 1 in perspektivischer Darstellung. Im Sinn einer bevorzugten Ausführungsform ist die Stütze 1 hohlzylindrisch. Auf gleicher Höhe sind z. B. acht gleiche Oeffnungen 2.1, ..., 2.6 (in der Darstellung gemäss Fig. 1 sind zwei Oeffnungen nicht erkennbar) vorgesehen. Sie sind in gleichen Abständen entlang des Umfanges verteilt. Werden also - wie noch zu beschreiben sein wird - zwei Träger in benachbarte Oeffnungen z. B. 2.1 und 2.2 eingefügt, dann bilden die Träger die Schenkel eines 45°-Winkels.

Bei Stützen mit grösseren Durchmessern können ohne Beeinträchtigung der Stabilität dieses Elements auch mehr (z. B. sechzehn) Oeffnungen vorgesehen sein. Entsprechend hat der Anwender mehr Gestaltungsfreiheit beim Aufbau des Gestellsystems. Damit eine minimale Flexibilität des Systems erreicht werden kann, sollten mindestens vier Oeffnungen vorgesehen sein. Eine solche Variante kann sich z. B. bei der Verwendung von quadratischen Rohrquerschnitten aufdrängen. Sinngemäss kann es auch von Vorteil sein, sechs- oder achteckige Rohrquerschnitte einzusetzen.

Ein Gestellsystem umfasst in der Regel unterschiedlich lange Stützen und u. U. auch unterschiedlich dicke. Oeffnungen sind vorzugsweise in regelmässigen, axialen Abständen in der in Fig. 1 gezeigten Weise angebracht (z. B. alle 40 cm).

Fig. 2 zeigt eine bevorzugte Ausführungsform eines Trägers 3. Es handelt sich dabei um ein zumindest abschnittsweise C-förmiges Metallprofil. Der Träger 3 weist zwei flache, plattenförmig ausgebildete Enden 4a, 4b auf. Jedes Ende 4a, 4b ist mit zwei Ausnehmungen 5.1, 5.2 resp. 6.1, 6.2 versehen. Die Ausnehmungen 5.1 und 5.2 resp. 6.1 und 6.2 sind bezüglich der Längsmittelachse des Trägers 3 symmetrisch. D. h. sie liegen einander diametral gegenüber.

Gemäss einer bevorzugten Ausführungsform sind die Ausnehmungen 5.1 und 5.2 resp. 6.1 und 6.2 in einem mittleren Bereich der flachen plattenförmig ausgebildeten Enden 4a, 4b angeordnet, damit der Träger 3 auch in einem bereits bestehenden (d. h. aufgebauten) Gestellsystem nachträglich eingesetzt resp. aus diesem herausgenommen werden kann. Es besteht also insbesondere zwischen dem C-förmigen Abschnitt des Metallprofils und den Ausnehmungen 5.1, 5.2 resp. 6.1, 6.2 ein flacher Abschnitt, der das obenerwähnte Austauschen eines Trägers ermöglicht. Die Enden 4a, 4b haben also eine gewisse Ueberlänge, die es ermöglicht, sie weiter in den entsprechenden Schlitz einzuschieben als es für die Fixierung erforderlich ist. Aus dem oben Gesagten ergibt sich, dass der flache Abschnitt zwischen den Ausnehmungen 5.1, 5.2 resp. 6.1, 6.2 und dem C-förmigen Abschnitt des Metallprofils mindestens so gross wie der Abstand der genannten Ausnehmungen vom Ende des Trägers sein sollte.

Fig. 3 zeigt ein Verriegelungselement 7 (ebenfalls leicht perspektivisch) von der Seite. Es handelt sich um ein plättchenförmiges Winkelstück vorzugsweise aus Metall. An einem Ende weist es einander diametral gegenüberliegende Nasen 8.1, 8.2 auf.

Da das Verriegelungselement keinen besonderen mechanischen Belastungen ausgesetzt ist, kann es z. B. auch aus Kunststoff oder aus einem anderen geeigneten Material bestehen.

Um zu erläutern, wie die erfindungsgemässe Verbindung zusammenzufügen ist und wie die einzelnen Elemente in ihren Dimensionen aufeinander abgestimmt sind, wird auf Fig. 4 Bezug genommen. Sie zeigt die Oeffnung 2.2 in vergrösserter Darstellung. Von der Form her entspricht sie zwei abstandslos seitlich nebeneinander angeordneten Schlitzen gleicher Breite aber unterschiedlicher Länge. Die beiden Schlitze definieren zwei Teilbereiche der Oeffnung 2.2. Beide sind rechteckig. Der längere hat eine Länge L1 von z. B. 3 cm und der kürzere eine solche L2 von z. B. 2,4 cm. Die Breite B1 des ersten Teilbereichs entspricht derjenigen B2 des zweiten. Sie beträgt z. B. B1 = B2 = 3 mm. Die beiden Teilbereiche resp. Schlitze sind symmetrisch bezüglich einer Querachse. Aufgrund der unterschiedlichen Längen werden zwei in die Oeffnung hineinragende Ecken oder Schultern 9.1, 9.2 gebildet.

Die Wandung der Stütze 1 ist z. B. d1 = 2 mm stark. Der Rohrdurchmesser beträgt z. B. 5 cm.

Für die nachfolgende Erläuterung wird davon ausgegangen, dass die Stütze 1 vertikal aufgestellt werden soll und die parallel zur Längsachse der Stütze 1 ausgerichteten Oeffnungen 2.1, ..., 2.6 somit ebenfalls vertikal stehen. Die im folgenden benützten Begriffe "oben", "unten", "links", "rechts" etc. beziehen sich auf die in Fig. 1 resp. 4 gezeigte Orientierung.

Der Träger 3 wird mit seinem Ende 4b in die Oeffnung 2.2 eingeführt. Da die Breite L3 des Trägers 3 resp. seiner Enden 4a, 4b grösser als die Länge L2 und vorzugsweise gerade etwas weniger lang als die Länge L1 der Oeffnung ist, ist das Ende 4b durch den längeren Teilbereich (L2) einzuführen. Die typischerweise U-förmigen Ausnehmungen 6.1, 6.2 sind etwas breiter als die Dicke der Wandung, d. h. B1 >d1. Sie sind so tief, dass ihr gegenseitiger Abstand L4 etwas kleiner als die Länge L2 des kurzen Teilbereichs der Oeffnung 2.2 ist. Wenn die Ausnehmungen 6.1 und 6.2 gerade gegenüber der Schultern 9.1 und 9.2 sind, dann kann das Ende 4b seitlich in den kleineren Teilbereich der Oeffnung 2.2 verschoben werden, wobei sich die Schultern 9.1 und 9.2 in die Ausnehmungen 6.1 und 6.2 schieben.

Damit das Ende 4b nicht mehr zurück kann, wird es mit dem Verriegelungselement 7 in der genannten Position blockiert. Die Dicke des Plättchens entspricht gerade etwa der Breite B1. Die Länge L5 ist etwas kleiner als die Länge L1. Die vorstehenden Nasen 8.1, 8.2 verhindern, dass das Verriegelungselement 7 durch die Oeffnung in die Stütze 1 hineinfallen kann. Die Gesamtlänge L6, die das Verriegelungselement 7 mit den Nasen 8.1, 8.2 einnimmt, ist z. B. etwa 6 mm grösser als die Schlitzlänge L1. Das Eigengewicht des abgewinkelten Endes 10 des Verriegelungselementes 7 zeigt im Stützrohr nach unten und verhindert, dass das Verriegelungselement 7 aus der Oeffnung 2.2 herausfallen kann.

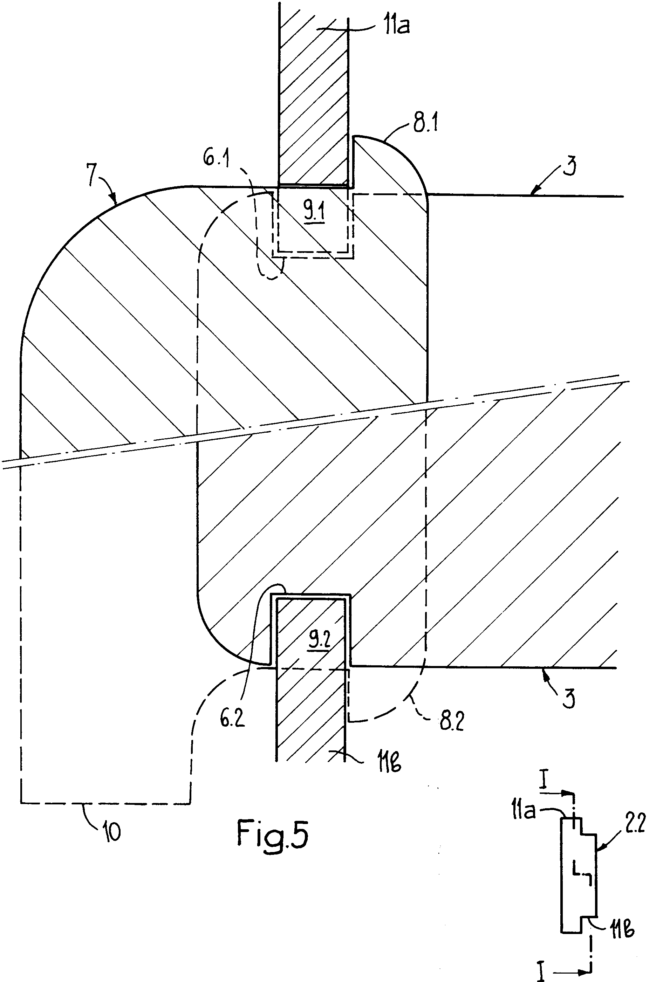

Fig. 5 zeigt die fertige Verbindung. Die Darstellung entspricht dem Schnitt I-I (vgl. kleine Darstellung rechts unten in Fig. 5). Mit 11a und 11b sind Teile der Wandung bezeichnet (Schmalseite der schlitzförmigen Oeffnung). Es ist deutlich zu erkennen, dass die Ausnehmungen 6.1 und 6.2 die Schultern 9.1 und 9.2 umgreifen. Nur ein kleiner Teil des Trägers 3, z. B. 1 cm, ragt in den Hohlraum der Stütze 1 hinein. Das Verriegelungselement 7 liegt mit seinen beiden Nasen 8.1 und 8.2 aussen an der Wandung 11a resp. 11b auf.

Es ragt nur sehr wenig (z. B. 2 mm) aus der Oeffnung der Stütze heraus. Der grösste Teil des Plättchens befindet sich im Inneren der Stütze. Es leuchtet unmittelbar ein, dass dies zu einem sehr abgerundeten und harmonischen Erscheinungsbild führt.

Im folgenden wird eine vorteilhafte und im Gesamtsystem gut einsetzbare Weiterbildung der Verbindung erläutert. Ausgangspunkt dieser Variante ist die Stütze gemäss Fig. 1. Sie soll mit Oeffnungen von der in Fig. 4 gezeigten Art versehen sein.

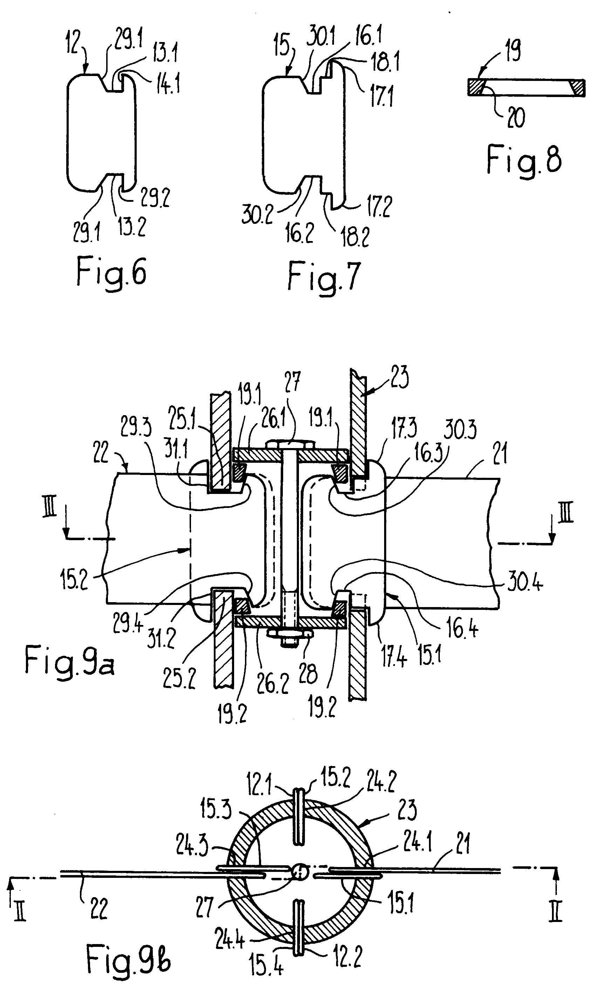

Der verwendete Träger braucht sich von dem in Fig. 2 gezeigten nur durch die Breite und gegebenenfalls die Form der Ausnehmungen 5.1, 5.2, 6.1, 6.2 zu unterscheiden. Im vorliegenden Fall sind diese nämlich zumindest breiter als in der oben beschriebenen ersten Ausführungsform und vorzugsweise schräg angeschliffen. Dies soll anhand des in Fig. 6 dargestellten Blindelements 12 erläutert werden.

Das Blindelement 12 ist ein Plättchen, das als Ersatz für einen Träger verwendet werden kann. Verbindungstechnisch entspricht es einem Ende eines Trägers (abgeschnittenes Ende). Es ist z. B. mehr oder weniger rechteckig und hat abgerundete Ecken. An den Schmalseiten des Rechtecks sind einander gegenüberliegende, spiegelbildlich angeordnete und ausgebildete Ausnehmungen 13.1, 13.2 vorgesehen. Die eine Flanke 14.1 resp. 14.2 jeder Ausnehmung 13.1 resp. 13.2 ist rechtwinklig zur Schmalseite (in welcher die Ausnehmung 13.1 resp. 13.2 vorgesehen ist). Die andere, der genannten gegenüberliegende Flanke 29.1 resp. 29.2 ist angeschrägt. Die Ausnehmungen 13.1 resp. 13.2 verengen sich also von aussen nach innen. Aussen ist die Ausnehmung wesentlich breiter als die Wandung des Stützrohrs dick ist. Die Bedeutung dieser nach aussen verbreiterten Ausnehmungen wird weiter unten anhand der Fig. 9a, 9b erläutert.

Fig. 7 zeigt ein Verriegelungselement 15 für die zweite Ausführungsvariante. Dieses ist auch plättchenförmig aber nicht mehr wie früher winkel- resp. L-förmig, sondern eher rechteckig. Es weist zwei Nasen 17.1, 17.2 auf, die die Gesamtbreite des Verriegelungselements 15 im Sinn der bereits früher erläuterten Ausführungsform über die Schlitzöffnung hinaus vergrössern. Zusätzlich ist es mit Ausnehmungen 16.1 und 16.2 versehen. Die genannten Ausnehmungen 16.1 und 16.2 befinden sich leicht abgesetzt hinter den Nasen 17.1, 17.2. Zwischen Nase 17.1 resp. 17.2 und Ausnehmung 16.1 resp. 16.2 wird eine Stufe 18.1 resp. 18.2 gebildet. Die Stufen 18.1, 18.2 positionieren das Verriegelungselement 15 im längeren Schlitzbereich (L1 in Fig. 4). Sie haben einen gegenseitigen Abstand, der der Länge L5 in der in Fig. 3 gezeigten Ausführungsform entspricht.

Die Ausnehmungen 16.1 und 16.2 sind spiegelsymmetrisch zueinander angeordnet. Sie haben vorzugsweise etwa denselben gegenseitigen Abstand wie die Ausnehmungen 13.1 und 13.2 der Blindelemente 12 resp. eines entsprechenden Trägerendes. Ferner verfügen sie über abgeschrägte Flanken 30.1, 30.2, welche dem selben Zweck wie die Flanken 29.1, 29.2 dienen.

Des weiteren wird ein Sprengring zur Fixierung der nachfolgend erläuterten Verbindung verwendet. Dieser kann einen runden oder einen eckigen Querschnitt haben.

Fig. 8 zeigt einen Schnitt durch einen eckigen Sprengring 19. Die Innenfläche 20 dieses Sprengrings 19 ist konisch zugeschliffen. Der Sprengring 19 kann somit als Keil verwendet werden.

Fig. 9a, 9b zeigt einen Achsenlängsschnitt resp. Achsenquerschnitt durch eine erfindungsgemäss fixierte Verbindung. In Fig. 9a ist gezeigt, wie der Schnitt III-III gemäss Fig. 9b zu verstehen ist. In Fig. 9b andererseits ist gezeigt, wie der Schnitt II-II, wie er in Fig. 9a dargestellt ist, entstanden ist. Es ist zu beachten, dass der Schnitt II-II auf der linken Seite einen anderen Ausschnitt der Oeffnung darstellt als auf der rechten. Die Oeffnungen resp. Verbindungen sind in Wahrheit also identisch.

Die in Fig. 9b gezeigte Stütze 23 hat vier Oeffnungen 24.1 bis 24.4. In zwei einander diametral gegenüberliegenden Oeffnungen 24.1, 24.3 ist je ein Träger 21 resp. 22 eingefügt. In den anderen beiden Oeffnungen 24.2, 24.4 sind anstelle von Trägern Blindelemente 12.1, 12.2 eingesetzt. Sowohl die beiden Träger 21, 22 als auch die Blindelemente 12.1, 12.2 sind mit Verriegelungselementen 15.1, 15.3 resp. 15.2, 15.4 blockiert.

Da die beiden Verbindungen, die in Fig. 9a zu sehen sind, identisch sind, gilt das, was für die eine gesagt wird, stets auch für die andere. Analog zur Verbindung gemäss Fig. 5 ragt das Verriegelungselement 15.1 mit zwei Nasen 17.3, 17.4 über den Rand der Oeffnung hakenförmig nach aussen. Die Ausnehmungen 16.3, 16.4 liegen mit den entsprechenden Ausnehmungen des Trägers 21 auf gleicher Höhe. Insbesondere liegen die abgeschrägten Flanken (z. B. 29.3, 29.4) des jeweiligen Trägers (z. B. 22) unmittelbar neben den entsprechend geneigten Flanken des daneben liegenden Verriegelungselementes (vgl. dazu Fig. 7, Flanken 30.1, 30.2 sowie Fig. 9a, Flanken 30.3, 30.4 des Verriegelungselementes 15.1).

Der Träger 22 steht mit den Flanken 31.1, 31.2, die im wesentlichen senkrecht zur Längsmittelachse des Trägers 22 sind, an den Schultern 25.1 resp. 25.2 der Oeffnung an (vgl. auch Fig. 4, Schultern 9.1, 9.2). Die Ausnehmungen von Träger 21 resp. 22 und Verriegelungselement 15.1 resp. 15.2 sind so breit, dass ein Sprengring 19.1 resp. 19.2 teilweise hineingeschoben werden kann. Der Sprengring 19.1 resp. 19.2 wirkt als Keil. Er drückt sich zwischen die Innenseite der Wandung (der Stütze 23) und die Flanken der Ausnehmungen und stabilisiert dadurch sowohl Träger 21, 22 als auch Verriegelungselemente 15.2. Zwei den Innenquerschnitt der Stütze 23 ausfüllende Scheiben 26.1, 26.2 sind von aussen (d. h. die Verbindung sandwichartig einklemmend) angelegt. Sie werden z. B. mit einer Schraube 27 und einer Mutter 28 verspannt resp. zueinander gepresst.

Die soeben beschriebene Verbindung schafft eine spielfreie Befestigung des Trägers an der Stütze. Die Blindelemente 12.1, 12.2 sind nur dazu da, die Sprengringe 19.1 und 19.2 resp. die Scheiben 26.1 resp. 26.2 zu stabilisieren. Wenn zwei Träger, wie in Fig. 9b gezeigt, diametral einander gegenüber an der Stütze 23 befestigt werden, dann können die Blindelemente 12.1 und 12.2 sowie die dazugehörigen Befestigungselemente 15.2 resp. 15.4 weggelassen werden. Wird jedoch nur ein Träger mit der Stütze verbunden, dann können sich die Scheiben 26.1, 26.2 beim Spannen der Schraubenverbindung (27, 28) verkanten. Um dies zu verhindern, ist zumindest eine diametral gegenüberliegende Oeffnung mit einem Blindelement zu versehen, welches als Abstützung für das beschriebene Klemmorgan wirken kann.

Bei einer Stütze mit mehr als vier auf gleicher Höhe angeordneten Oeffnungen kann auch eine sog. Dreipunktlagerung realisiert werden. D. h. an drei möglichst gleichmässig über den Umfang verteilten Punkten werden die Sprengringe resp. die Scheiben unter Zuhilfenahme von Blindelementen abgestützt. Dies ist insbesondere dann sinnvoll, wenn zwei Träger mit einer Stütze verbunden werden, die untereinander keinen 180°-Winkel einschliessen sollen.

Die Erfindung beschränkt sich nicht auf die oben dargelegten Beispiele. Dies soll durch die nachfolgend angedeuteten Varianten unterstützt werden.

Die Oeffnung braucht nicht wie in Fig. 4 dargestellt ausgebildet zu sein. Die Schultern können statt rechtwinklig auch abgeschrägt (konisch) ausgebildet sein. So ist z. B. eine trapezförmige Oeffnung ebenfalls im Sinne der Erfindung. Die Oeffnung braucht natürlich auch nicht symmetrisch (bezüglich einer Querachse) zu sein. So kann bei der Doppelschlitzöffnung der kürzere Schlitz gegenüber dem längeren (in Schlitzrichtung) verschoben sein. In diesem Sinn liegt auch eine L-förmige Oeffnung im Rahmen der Erfindung. Eine solche Oeffnung hat nur eine ausgeprägte Schulter (nämlich das von den beiden Schenkeln des "L" eingeschlossene Wandungsstück).

Die Oeffnung kann auch leicht abgerundet, insbesondere segmentförmig oder halbkreisförmig sein. Der entsprechende Träger wäre z. B. mit einer nutartigen Ausnehmung zu versehen, in die die Wandung eingreifen könnte. Wesentlich für die erfindungsgemässe Oeffnung ist nur eine irgendwie geartete Verengung resp. das Vorhandensein eines breiteren und eines verengten Teilbereichs.

Das in Fig. 9a gezeigte Klemmorgan zum Verspannen der Träger gegenüber der Stütze kann auch mit anderen Mitteln realisiert werden. Anstelle des eckigen, konisch angeschliffenen Sprengrings kann ein runder eingesetzt werden. Die Schraube kann durch einen anderen klemmenden Mechanismus ersetzt werden.

Anstelle von Klemmring, Scheiben und Schraubenstange können auch andere Mittel eingesetzt werden, die dazu geeignet sind, den Träger gegenüber der Stütze zu verkeilen. Es können z. B. C-förmige Klammern hergestellt werden, die anstelle von Sprengring 19.1 und Scheibe 26.1 resp. Sprengring 19.2 und Scheibe 26.2 treten können. Es ist auch ein Klemmmechanismus denkbar, der für jede Verbindung zwischen Träger und Stütze einzeln angebracht wird, so dass die Benutzung von Blindelementen entfallen kann.

Zusammenfassend kann festgestellt werden, dass durch die Erfindung ein Gestellsystem mit einfach herzustellenden Einzelteilen geschaffen worden ist, das mit gut handhabbaren, vielseitig verwendbaren und ästhetisch ansprechenden Verbindungen ausgestattet ist.

## Patentansprüche

1. Einrichtung, insbesondere Gestellsystem mit mehreren zusammenfügbaren Elementen, umfassend ein erstes Element mit einer durch mindestens eine Oeffnung durchbrochenen Wandung und ein zweites Element mit einem in die genannte Oeffnung einführbaren und an der Wandung einhakbaren Ende zur Bildung einer lösbaren Verbindung, dadurch gekennzeichnet, dass die Oeffnung (2.1, ..., 2.6) so ausgebildet ist, dass das zweite Element (3) in ihr zum Einhaken transversal verschiebbar ist, wobei ein Bereich (L1) der Oeffnung freigegeben wird, und dass ein Verriegelungselement (7) vorgesehen ist, welches in den freien Bereich (L1) einfügbar ist.

2. Einrichtung nach Anspruch 1, dadurch gekennzeichnet, dass das zweite Element (3) einander diametral gegenüberliegende, zum Einhaken geeignete, vorzugsweise U-förmige Ausnehmungen (5.1, 5.2) aufweist und dass die Oeffnung (2.2) länglich, insbesondere schlitzförmig ist.

3. Einrichtung nach Anspruch 1 oder 2, dadurch gekennzeichnet, dass das Ende des zweiten Elements (3) flach, insbesondere plattenförmig ist.

4. Einrichtung nach einem der Ansprüche 1 bis 3, dadurch gekennzeichnet, dass die Oeffnung (2.2) von der Form zweier unmittelbar nebeneinander angeordneter Schlitze unterschiedlicher Länge (L1, L2) und gleicher Breite (B1, B2) ist.

5. Einrichtung nach einem der Ansprüche 1 bis 4, dadurch gekennzeichnet, dass das Verriegelungselement (7) ein flaches Plättchen ist, das am Ende beidseitig Nasen (8.1, 8.2) hat, die bei eingeführtem Verriegelungselement (7) über den Rand der Oeffnung (2.2) hinausragen.

6. Einrichtung nach Anspruch 4 oder 5, dadurch gekennzeichnet, dass das Verriegelungselement (7) als Winkel ausgebildet ist.

7. Einrichtung nach einem der Ansprüche 2 bis 6, dadurch gekennzeichnet, dass die Breite der U-förmigen Ausnehmungen (5.1, 5.2) am Ende des zweiten Elements (3) etwa der Dicke (d1) der Wandung des ersten Elements (1) entspricht.

8. Einrichtung nach einem der Ansprüche 1 bis 7, dadurch gekennzeichnet, dass das erste Element (1) ein eine Stütze bildendes Rohr (1) ist, bei welchem mehrere Oeffnungen (2.1, ... , 2.6) parallel zur Achse auf gleicher Höhe vorgesehen sind.

9. Einrichtung nach einem der Ansprüche 2 bis 8, dadurch gekennzeichnet, dass die U-förmigen Ausnehmungen (5.1, 5.2) wesentlich breiter als die Dicke der Wandung (d1) der Stütze (1) ist, dass das Verriegelungselement (15) ebenfalls U-förmige Ausnehmungen (16.1, 16.2) aufweist und dass ein im Inneren der Stütze (1) anzuordnendes Klemmorgan (26.1, 26.2, 19.1, 19.2, 27, 28) in die Ausnehmungen (16.1, 16.2) zumindest teilweise eingreifen kann, um das zweite Element (21, 22) gegen die Wandung der Stütze (23) zu verkeilen.

10. Einrichtung nach Anspruch 9, dadurch gekennzeichnet, dass das Klemmorgan zwei in die Stütze (23) einbringbare Sprengringe (19.1, 19.2), zwei dem Innenquerschnitt der Stütze (23) angepasste Scheiben (26.1, 26.2) und eine Schraubenstange (27, 28) zum Verbinden und Spannen der Scheiben (26.1, 26.2) resp. Sprengringe (19.1, 19.2) umfasst.

11. Einrichtung nach Anspruch 9 oder 10, dadurch gekennzeichnet, dass Blindelemente (12) vorgesehen sind, die verbindungstechnisch einem Ende eines Trägers (21, 22) entsprechen.

12. Element, insbesondere Stütze mit einer durch mindestens eine Oeffnung durchbrochenen Wandung für eine Einrichtung nach einem der Ansprüche 1 bis 11, gekennzeichnet durch mehrere Oeffnungen (2.1, ..., 2.6), die so ausgebildet sind, dass ein zweites Element (3) in die Oeffnungen (2.1, ..., 2.6) einführbar und zum Einhaken transversal verschiebbar ist, wobei ein Bereich (L1) der Oeffnung (2.2) freigegeben wird, in welchen Bereich ein Verriegelungselement (7) einfügbar ist.

13. Element, insbesondere Träger für eine Einrichtung nach Anspruch 1, gekennzeichnet durch ein Ende mit einander diametral gegenüberliegenden Ausnehmungen (5.1, 5.2) zum Einhaken des Elements (3) an einer eine Oeffnung (2.2) begrenzenden Wandung eines Elements nach Anspruch 12.

14. Verriegelungselement für eine Einrichtung nach Anspruch 1, gekennzeichnet durch zwei einander diametral gegenüberliegende Nasen (8.1, 8.2).
